(19) Europäisches Patentamt
European Patent Office
Office européen des brevets

(11) Publication number: 0 023 428
B1

(12) # EUROPEAN PATENT SPECIFICATION

(45) Date of publication of patent specification: 21.11.85

(51) Int. Cl.$^4$: C 22 B 3/00

(21) Application number: 80302558.4

(22) Date of filing: 25.07.80

(54) **Liquid-liquid process for extracting metals using organo-phosphorous compounds.**

(30) Priority: 30.07.79 FR 7919609

(43) Date of publication of application:
04.02.81 Bulletin 81/05

(45) Publication of the grant of the patent:
21.11.85 Bulletin 85/47

(84) Designated Contracting States:
BE DE GB IT NL

(56) References cited:
FR-A-2 195 591
FR-A-2 267 380
FR-A-2 290 499
GB-A- 929 185
US-A-3 399 055
US-A-3 666 446
US-A-3 950 488

T.H. Handley et al. Aral. Chem., Vol. 34, No. 10, page 1312-1315

Y. Marcus et al. "Ion Exchange and Solvent Extraction of Metal Complexes", Wiley Interscience (1969), pp. 536, 550

(73) Proprietor: The British Petroleum Company p.l.c.
Britannic House Moor Lane
London EC2Y 9BU (GB)

(72) Inventor: Ventron, Gilbert Société Française des Pétroles BP
10 Quai Paul Doumer
F-92401 Courbevoie (FR)

(74) Representative: MacLeod, Malcolm et al
c/o The British Petroleum Company plc
Patents Division Chertsey Road
Sunbury-on-Thames Middlesex, TW16 7LN (GB)

(56) References cited:
"Les Composes Thiophosphoro-organiques", L. Almasi, Masson (1976)

"Rapport d'Etude D.G.R.S.T. Ecole Supérieure de Physique et Chimie Industrielle", Soc. Minimet Recherche (1975)

EP 0 023 428 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for extracting metals from an aqueous solution.

This type of process is an important operation in the processing of ores by hydrometallurgical routes.

One process at present used to extract a metal from its ore comprises comminution of the ore and then solubilisation of the metal values by a chemical treatment whereupon a pregnant leach liquor is produced. The liquor may then be contacted with an organic phase containing an extracting agent solubilised in a diluent in order to extract the metal values into the organic phase.

Extraction comprises two operations: a first stage mixing of the two phases, which favours complex-formation and the transfer of the compound to be extracted from one phase to the other, and a second stage separation by natural or forced decantation.

Generally speaking, the treatments to which the metal thus extracted is subjected, such as electrolysis or crystallisation, require an additional extraction of the metal from the organic phase, which is termed the de-extraction stage or "Stripping".

The properties of the complex-forming agent in hydrometallurgy depend on the nature of the two phases present, and also on the composition and the molecular structure of the said agent. The properties of the complexes formed and the selectivity of the extraction agent depend in particular on the molecular structure.

T. H. Handley *et al.,* Anal. Chem., Vol. 34, No. 10, page 1312-1315 discloses that O,O'-dialkyl phosphorodithioic acids may be used as extractants for metals. The compounds disclosed all had unsubstituted alkyl groups.

Y. Marcus *et al.,* "Ion Exchange and Solvent Extraction of Metal Complexes", Wiley Interscience (1969), pp 536, 550 discloses the use of acid organophosphorous compounds as metal extractants but does not disclose O,O-diesters of dithiophosphoric acid having hydrocarbyl groups substituted by electron acceptor groups.

Les Composes Thiophosphoro-organiques, L. Almasi, discusses the chemistry of the O,O-diesters of dithiophosphoric acid and states that they form chelates with metals. There is no reference to the use of electron acceptor groups to provide better extractants for recovering metals from aqueous solutions.

The "Rapport d'Etude D.G.R.S.T. Ecole Superieure de Physique et Chimie Industrielle, Soc. Minemet Recherche, discloses the use of O,O-diesters of thiophosphoric acid as metal extractants. The esters are alkyl or cycloalkyl esters, and there is no disclosure of the presence of electron accepting substituents.

Only experimentation will make it possible to assess the value and efficacy of a new extraction agent or to select its structure as a function of the problem to be solved.

Moreover, it is often necessary to carry out leaching in an acid medium, and sometimes to operate at elevated temperature and under pressure. Lixiviating agents which have been used up to now have numerous disadvantages under these conditions, so that efforts have been made to develop lixiviating agents giving good yields and capable of working under these conditions.

In certain cases it is desirable to be able to extract other metals in addition to the principal metal, thus helping to increase the profitability of a process and to render possible exploitation of a deposit which would otherwise not be sufficiently profitable if only the principal metal were extracted from it.

The present invention therefore relates to a process for the extraction of metals, in the form of metallic salts in aqueous solution, by means of liquid-liquid extraction, by forming a complex with an extraction agent which is a dithiophosphoric acid derivative.

Thus according to the present invention there is provided a process for the liquid/liquid extraction of a metal from an aqueous solution wherein the aqueous solution is brought into contact with an organic solvent containing a water insoluble extractant characterised by the fact that the extractant has the general formula:

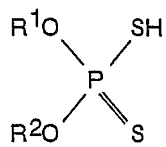

wherein $R^1$ and $R^2$ which may be the same or different, represent straight or branched chain alkyl, cycloalkyl, aryl or aryl-alkyl groups, and contain at least one electron acceptor selected from the group consisting of halogen, nitro, cyano, hydroxy, amino or alkoxy groups.

Suitable electron acceptor groups are thus halogen, nitro, cyano, hydroxy, amino and alkoxy groups.

Preferably the electron acceptor group is a chlorine atom.

$R^1$ and $R^2$ may be phenyl groups substituted by a halogen electron acceptor group and optionally by one or more alkyl groups containing 1 to 10 carbon atoms.

Alkoxy groups, if present, preferably contain 1 to 4 atoms, and most preferably are methoxy or ethoxy.

Cycloalkyl groups, if present, preferably contain 3 to 10 carbon atoms.

The compounds used in a process according to the invention are known per se and may be prepared by known methods.

Dithiophosphoric acids may be prepared by the action of an alcohol or a phenol on phosphorus pentasulphide. Thiophosphoric acids may be prepared by the action of sulphur on a phosphide or of sodium hydroxide on a chlorothiophosphate derivative.

The extraction agents thus obtained may be purified by means of known purification methods, but they are preferably utilised in the crude form, which appreciably improves the kinetics of the extraction and/or de-extraction reactions, and also the physical properties of the phase mixtures (better decantation and better phase transfer).

This improved activity of the phosphorus derivatives is probably a result of the presence in the reaction medium of polar or solvating derivatives such as excess alcohol, or mono- or poly-phosphorus secondary derivatives. The possibility of utilising the reaction mixture constitutes a further advantage of the invention and makes it possible to reduce the cost of the process.

The process according to the invention can be applied to the extraction of any metal which forms a stable complex with the extracting agent and which dissolves in the organic phase.

Suitable organic solvents are immiscible with water and under the chosen pH conditions are inert to acids, metal salts and the compound used as extraction agent.

Preferred solvents are aliphatic, alicyclic and aromatic hydrocarbons such as hexane, heptane, cyclohexane, benzene, toluene, xylene, etc., chlorinated solvents such as carbon tetrachloride, chloroform, perchlorethylene, etc., ketones insoluble in water, esters, etc. Solvents frequently utilised alone or in a mixture with each other include crude oil or processed oil fractions with a high flash point, such as light naphtha, heavy naphtha, kerosene, paraffinic solvents and naphthenic solvents.

The separation of the aqueous phase from the organic phase during the process according to the invention is promoted if a solvent is used which has a density which is distinctly different from that of the aqueous solution.

The quantity of organic solvent used may vary over a wide range and depends on the quantity of metal to be extracted and the quantity of extraction agent employed.

The volumetric ratio of the organic phase to the aqueous phase may vary between 10/1 and 1/10 for the extraction and approximately between 1/5 and 50/1 for the de-extraction (stripping). The preferred ranges lie between 5/1 to 1/2 for the extraction and 1/2 to 10/1 for the stripping.

It is possible to improve still further the extraction and stripping reactions of the metals in the process according to the invention by adding a polar organic additive with a solvating effect such as a phosphate or thiophosphate, polyphosphate of an alcohol or an inorganic additive such as a neutral ammonium salt, or an alkali metal or alkaline earth metal salt.

The process according to the invention may be applied to aqueous solutions resulting from the leaching of ores or from the processing of metal scrap or other residues containing metals resulting, for example, from acid treatment, by using an acid such as sulphuric acid, sulphurous acid or hydrochloric acid. The process may also be applied to spent liquors containing metals resulting from electrolytic or chemical operations.

The extraction and stripping of the metallic ions may be effected in conventional liquid-liquid extraction equipment. Preferred equipment comprises a mixing chamber in which the two liquids are thoroughly mixed by means of a suitable stirrer system and a separation chamber in which the two liquids are separated by virtue of their different densities.

Extraction and stripping take place mainly at ambient temperature, but depending on the metal to be extracted or other metals present, it may be desirable, especially during stripping, to work at a temperature in the range 5° to 75°C.

The operating pressure is generally atmospheric pressure, but it is also possible to work under a pressure of from 1 to 5 bar.

The aqueous solution should be acidic and the pH is preferably less than 3.

The process may be used in particular for the extraction of nickel, copper, uranium, molybdenum, lead, cadmium, cobalt, iron, zinc, vanadium, tin and tungsten.

The invention is illustrated by the following examples.

Example 1

The initial aqueous solution contained 5 g per litre of nickel in the form of sulphate.

The pH of the aqueous solution which contained sulphuric acid was in the vicinity of 1.

The organic solution contained a mixture of hydrocarbons. It had a density at 15° of 0.895 and a flash point above 65°, and its aromatics content was greater than 97 per cent by weight.

The ratio of the organic phase to the aqueous phase by volume was equal to 1 in the extraction stage.

The reaction mixture resulting from the preparation of the compound of formula $(RO)_2$ PSSH in which R designates the chlorophenyl group was used as the extractant.

Diparachlorophenyl dithiophosphoric acid was prepared according to the following process:

124 g of parachlorophenol was introduced into a reactor provided with a stirrer and means for reflux.

49 g of phosphorus pentasulphide was added over 1 hour after having brought the flask to a temperature of 150°C. The reaction was stopped after one hour's agitation at 150°C. After filtration a crude synthesis product was obtained containing four major products:

| | |
|---|---|
| unreacted phenol ROH | 10% |
| dithiophosphoric acid $(RO)_2P(S)SH$ | 75% |
| trithiophosphoric acid $ROP(S)(SH)_2$ | 8% |
| trisubstituted phosphate $(RO)_3PS$ | 7% |

The content of dithiophosphoric acid of the solvent was 43 g/litre.

The aqueous phase (250 ml) containing the nickel salt was placed in a separating funnel equipped with an agitator with vanes. The organic phase (250 ml) containing the extraction agent was then added. The phases were then agitated. Analyses by atomic absorption of the nickel contained in the aqueous phase made it possible to follow the metal extraction as a function of the time. At the end of a period "teq"=10 mins, extraction equilibrium was reached.

The extraction yield which corresponded to the quantity of nickel extracted in relation to the quantity of nickel initially present in the aqueous solution was equal to 74%.

The stripping was carried out by bringing 250 ml of the organic phase thus obtained into contact for 10 minutes with 10 N HCl in a volumetric ratio of 5:1. The stripping yield was equal to 99%.

## Example 2 to 9

By operating as described in Example 1 and also using the reaction mixture resulting from the preparation of the dithiophosphoric acid derivative, the following results were obtained.

TABLE 1

| Example | Extraction Agent $(RO)_2$ PSSH Nature of the Radical R | Content of Extraction Agent g/litre | Extraction | |
|---|---|---|---|---|
| | | | % | teq |
| 2 | Chlorobutyl | 32 | 55 | 10 min |
| 3 | 2,4-Dichlorophenyl | 40 | 51 | <20 sec |
| 4 | 2,4,5-Trichlorophenyl | 41 | 45 | <20 sec |
| 5 | 4-Chloro-3-methylphenyl | 52 | 63 | <20 sec |
| 6 | 4-Chloro-2-methylphenyl | 46 | 59 | <30 sec |
| 7 | 4-Chloro-2-isopropyl-5-methylphenyl | 60 | 53 | 5 min |
| 8 | 4-Bromophenyl | 18 | 20 | |
| 9 | 4-Methoxyphenyl | 72 | 48 | |

## Example 10

A series of liquid/liquid extractions was carried out under the conditions stated in Example 1 but with a purified extraction agent: 2,4-dichlorophenyldithiophosphoric acid.

For an extraction agent content of 47 g/litre, the extraction yield was 78% and the stripping yield was 21%.

## Example 11

A series of liquid/liquid extractions was carried out on monometallic sulphide containing 1 to 5 g/litre of metal at a pH of 1. The organic diluent was a hydrocarbon with an aromatic content of >93%. The extraction agents utilised were non-purified compounds. The aqueous phase (25 ml) and the organic phase (25 ml) were mixed in separating funnels placed on a mechanical agitator.

For stripping, the volume ratio of the organic phase to the aqueous phase was 5:1. The operation was carried out using 25 ml of organic phase brought into contact in the same way as before with the aqueous phase.

TABLE 2

| Metal g/litre | Extraction Agent $(RO)_2$ PSSH Nature of the Radical R | Extraction Agent Content g/litre | Extraction % | Stripping % |
|---|---|---|---|---|
| *Copper* 3 | 4-Chlorophenyl | 21 | 60 | 80 |
| 5 | 2,4,5-Trichlorophenyl | 94 | 98 | nd |
| 5 | 4-Chloro-4-methylphenyl | 52 | 76 | 36 |
| 5 | 4-Chloro-2-isopropyl-3-methylphenyl | 64 | 80 | 2.5 |
| *Uranium* 1 | 4-Chloro-3-methylphenyl | 1 | 20 | 100 |

Example 12

By operating under the conditions of Example 11 and using the reaction product of Example 1, molybdenum, lead, cadmium and tin were extracted from aqueous solutions.

TABLE 3

| Metal g/litre | | Extraction Agent $(RO)_2$ PSSH Nature of the Radical R | Extraction Agent Content g/litre | Extraction % |
|---|---|---|---|---|
| Molybdenum | 0.89 | 4-Chlorophenyl | 1 | 5 |
| Lead | 1.0 | 4-Chlorophenyl | 4 | 98 |
| Cadmium | 1.0 | 4-Chlorophenyl | 6 | 98 |
| Tin | 1.0 | 4-Chloro-3-methylphenyl | 4.5 | 52 |

Example 13

Treatments identical to those of Example 11 were carried out on several bimetallic sulphide solutions. The results are summarised in Table 4.

TABLE 4

| Pair of Metals | Extraction Agent $(RO)_2$ PSSH Nature of the Radical R | pH | Extraction Agent Content g/litre | Extraction Org. | Phase | Extraction Aq. | Phase | Stripping Org. | Phase | Stripping Aq. | Phase | Purity after Stripping |
|---|---|---|---|---|---|---|---|---|---|---|---|---|
| Ni(5g/l)/ Co(1g/l) | | | | Ni g/l | Co g/l | Ni g/l | Co g/l | Ni g/l | Co g/l | Ni g/l | Co g/l | Ni % |
| | 4-Chlorophenyl | 1 | 45 | 3.7 | <0.05 | 1.3 | <0.95 | 0.6 | <0.05 | 15.5 | <0.01 | 99.9 |
| | ,, ,, | 3 | 34 | 2.8 | 0.5 | 2.2 | 0.5 | 1.88 | 0.49 | 4.62 | 0.05 | 98.9 |
| | 2,4,5-Trichlorophenyl | 1 | 51 | 2.4 | 0.5 | 2.6 | 0.5 | 1.8 | 0.6 | 2.94 | 0.01 | >99.7 |
| | 4-Chloro-3-methylphenyl | 1 | 28 | 1.7 | 0.2 | 3.3 | 0.8 | 1.1 | 0.19 | 3 | 0.05 | 98.4 |
| | ,, ,, | 2 | 28 | 0.9 | 0.1 | 4.1 | 0.9 | 0.2 | 0.09 | 3.5 | 0.05 | 98.6 |
| | ,, ,, | 3 | 45 | 2.5 | 0.5 | 2.5 | 0.5 | 1.8 | 0.49 | 3.5 | 0.05 | 98.6 |
| Cu(3g/l)/ Fe(2g/l) | | | | Cu g/l | Fe g/l | Cu g/l | Fe g/l | Cu g/l | Fe g/l | Cu g/l | Fe g/l | Cu % |
| | 4-Chlorophenyl | 1 | 34 | 2.9 | 0.05 | 0.1 | 1.95 | | | | | |
| | ,, ,, | 2 | 9 | 0.8 | <0.01 | 2.2 | >1.99 | 0.1 | <0.01 | 3.5 | <0.01 | >97.7 |
| | ,, ,, | 3 | 9 | 0.9 | <0.01 | 2.1 | >1.99 | 0.1 | <0.01 | 4 | <0.01 | >99.7 |
| | 4-Chloro-3-methylphenyl | 1 | 7 | 0.5 | <0.01 | 2.5 | >1.99 | 0.41 | <0.01 | 0.45 | <0.01 | >97.8 |
| | 2,4,5-Trichlorophenyl | 1 | 26 | 1.5 | <0.01 | 1.5 | >1.99 | 0.45 | <0.01 | 5.25 | <0.01 | >99.8 |
| Ni(5g/l)/ Zn(1g/l) | | | | Ni g/l | Zn g/l | Ni g/l | Zn g/l | Ni g/l | Zn g/l | Ni g/l | Zn g/l | Zn % |
| | 4-Chlorophenyl | 1 | 1.8 | <0.01 | 0.11 | >4.9 | 0.89 | <0.01 | 0.01 | <0.01 | 0.5 | >99.8 |
| | ,, ,, | 2 | 1.8 | <0.01 | 0.16 | >4.9 | 0.84 | <0.01 | 0.06 | <0.01 | 0.5 | >99.8 |
| | 4-Chloro, 2-isopropyl-3-methylphenyl | 1 | 3 | <0.01 | 0.08 | >4.9 | 0.92 | <0.01 | 0.07 | <0.01 | 0.05 | >83 |
| | ,, ,, | 2 | 3 | <0.01 | 0.2 | >4.9 | 0.8 | <0.01 | 0.1 | <0.01 | 0.5 | >98 |

Example 14

By proceeding in the same manner as that stated in Example 13 with a metallic sulphide solution the following results were obtained:

TABLE 5

| Pair of Metals | Extraction Agent $(RO)_2$ PSSH Nature of the Radical R | pH | Extraction Agent Content g/litre | Extraction | | | |
|---|---|---|---|---|---|---|---|
| | | | | Org. Phase | | Aq. Phase | |
| | | | | g/l | g/l | g/l | g/l |
| Pb (1 g/l)/ Zn (1 g/l) | | | | Pb | Zn | Pb | Zn |
| | 4-Chlorophenyl | 1 | 11 | >0.98* | 0.64 | <0.02 | 0.36 |
| Zn (1 g/l)/ Cd (1 g/l) | | | | Cd | Zn | Cd | Zn |
| | 4-Chlorophenyl | 1 | 14 | >0.995* | 0.7 | <0.005 | 0.3 |
| W (1 g/l)/ Sn (1 g/l) | | | | W | Sn | W | Sn |
| | 4-Chlorophenyl | 1 | 11 | 0.8 | <0.1 | 0.2 | >0.9 |

* The complex is insoluble in the two phases and precipitated out.

Example 15

A liquid/liquid extraction was carried out on a quaternary solution of metallic ions:

Cu (1g/l) — Co (1g/l) — Zn (1g/l) — Ni (5g/l).

The crude reaction product used was the product of the reaction between $P_2S_2$ and parachorophenol. The extraction agent contained essentially diparachlorophenyl dithiophosphoric acid. The concentration of the extraction agent was 11 g/litre.

The operating conditions were those described in Example 11 (for the diluent, pH=1, organic phase/aqueous phase=1/1).

The results were as follows:—

TABLE 6

| Metal / Phase | Ni | Cu | Co | Zn |
|---|---|---|---|---|
| Extract | 0.1 | 0.99 | 0.1 | 0.1 |
| Raffinate | 4.9 | 0.01 | 0.9 | 0.9 |

The extract was the organic phase and the raffinate the aqueous phase.

Example 16

An aqueous solution containing 2 g/litre of zinc acidified with sulphuric acid to a pH of 1 was treated as described in Example 11.

The extractant used was di(2-chloro-4-nonylphenyl) dithiophosphoric acid prepared by reacting 2-chloro-4-nonylphenol with phosphorus pentasulphide at 170°C.

An organic solution containing 20 g/litre of extractant was used. After 10 minutes stirring, the extraction yield was 95%.

**Claims**

1. A process for the liquid/liquid extraction of a metal from an aqueous solution wherein the aqueous solution is brought into contact with an organic solvent containing a water insoluble extractant characterised by the fact that the extractant has the general formula:

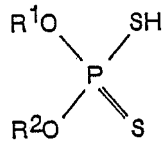

wherein $R^1$ and $R^2$ which may be the same or different, represent straight or branched chain alkyl, cycloalkyl, aryl or aryl-alkyl groups, and contain at least one electron acceptor selected from the group consisting of halogen, nitro, cyano, hydroxy, amino or alkoxy groups.

2. A process according to claim 1 characterised in that the electron acceptor is a chlorine atom.

3. A process according to either of the preceding claims characterised in that the reaction mixture obtained by reaction of an alcohol, a phenol or a mixed alcohol-phenol with phosphorus pentasulphide is used as the extractant without purification.

4. A process according to any of the preceding claims characterised in that the organic solution containing the metal is contacted with a second aqueous solution to strip the metal from the organic to the second aqueous solution.

5. A process according to any of the preceding claims characterised in that the aqueous solution initially contains one or more of the following metals: nickel, copper, uranium, molybdenum, lead, cadmium, cobalt, iron, zinc, vanadium, tin and tungsten.

**Patentansprüche**

1. Verfahren zur Flüssig/Flüssig-Extraktion eines Metalls aus einer wäßrigen Lösung, wobei die wäßrige Lösung mit einem ein wasserunlösliches Extraktionsmittel enthaltenden organischen Lösungsmittel in Kontakt gebracht wird, dadurch gekennzeichnet, daß das Extraktionsmittel die allgemeine Formel

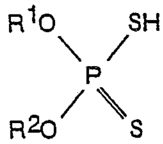

besitzt, in der $R^1$ und $R^2$, die gleich oder verschieden sein können, geradkettige order kettenverzweigte Alkyl-, Cycloalkyl-, Aryl- oder Arylalkyl-Gruppen bezeichnen und wenigstens einen Elektronen-Acceptor enthalten, der aus der aus Halogen-, Nitro-, Cyano-, Hydroxy-, Amino- oder Alkoxy-Gruppen bestehenden Gruppe ausgewählt ist.

2. Verfahren nach Anspruch 1, dadurch gekennzeichnet, daß der Elektronen-Acceptor ein Chlor-Atom ist.

3. Verfahren nach einem der beiden vorhergehenden Ansprüche, dadurch gekennzeichnet, daß die durch Reaktion eines Alkohols, eines Phenols oder eines gemischten Alkohol-Phenols mit Phosphorpentasulfid erhaltene Reaktionsmischung ohne Reinigung als Extraktionsmittel verwendet wird.

4. Verfahren nach irgendeinem der vorhergehenden Ansprüche, dadurch gekennzeichnet, daß die das Metall enthaltende organische Lösung mit einer zweiten wäßrigen Lösung in Kontakt gebracht wird, um das Metall aus der organischen in die zweite wäßrige Lösung abzustreifen.

5. Verfahren nach irgendeinem der vorhergehenden Ansprüche, dadurch gekennzeichnet, daß die wäßrige Lösung anfänglich eines oder mehrere der folgenden Metalle enthält: Nickel, Kupfer, Uran, Molybdän, Blei, Cadmium, Cobalt, Eisen, Zink, Vanadium, Zinn und Wolfram.

**Revendications**

1. Procéce pour l'extraction liquide/liquide d'un métal d'un solution aqueuse, dans lequel on met la solution aqueuse en contact avec un solvant organique contenant un agent d'extraction insoluble dans l'eau, caractérisé en ce que l'agent d'extraction a la formule générale:

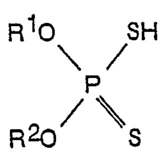

dans laquelle $R^1$ et $R^2$, qui peuvent être semblables ou différents, représentent des groupes alkyle à chaîne droite ou ramifiée, cycloalkyle, aryle ou arylalkyle et contiennent au moins un accepteur d'électrons choisi dans le groupe comprenant les halogènes, les groupes nitro, cyano, hydroxyle, amine ou alcoxyle.

2. Procédé selon la revendication 1, caractérisé en ce que l'accepteur d'électrons est un atome de chlore.

3. Procédé selon l'une ou l'autre des revendications précédentes, caractérisé en ce que l'on utilise comme agent d'extraction, sans purification, le mélange réactionnel obtenu par réaction d'un alcool, d'un phénol ou d'un alcool-phénol mixte sur le pentasulfure de phosphore.

4. Procédé selon l'un quelconque des revendications précédentes, caractérisé en ce que l'on met en contact la solution organique contenant le métal avec une deuxième solution aqueuse pour faire passer le métal de la solution organique à la deuxième solution aqueuse.

5. Procédé selon l'un quelconque des revendications précédentes, caractérisé en ce que la solution aqueuse contient initialement un ou plusieurs des métaux suivants: le nickel, le cuivre, l'uranium, le molybdène, le plomb, le cadmium, le cobalt, le fer, le zinc, le vanadium, l'étain et le tungstène.